# EUROPEAN PATENT SPECIFICATION

(11) **EP 2 444 613 B1**
(45) Date of publication and mention of the grant of the patent: **18.03.2015**
(21) Application number: 10188558.0
(22) Date of filing: 22.10.2010
(51) Int. Cl.: B01F 5/04, B01F 3/04, F01N 3/20

(54) **Arrangement and method for treatment of exhaust gases**
Anordnung und Verfahren zur Behandlung von Abgasen
Dispositif et procédé pour le traitement de gaz d'échappement

(43) Date of publication of application: 25.04.2012
(73) Proprietor: Volvo Car Corporation, 40 531 Göteborg (SE)
(72) Inventor: Sandberg, Peter, 41743 Göteborg (SE); Stenfeldt, Marie, 43537 Göteborg (SE)
(74) Representative: Kraenzmer, Martin

(56) References cited:
- WO-A1-00/29728
- DE-A1-102004 001 331
- DE-A1-102006 055 655

## Description

### TECHNICAL FIELD

The present invention relates to an exhaust gas treatment arrangement for treating exhaust gases flowing along a flow path in an exhaust pipe system in accordance with the preamble of claim 1. Moreover, the present invention relates to a method of treating exhaust gases flowing along a flow path in an exhaust pipe system in accordance with the preamble of claim 12.

### BACKGROUND OF THE INVENTION

Combustion engines in vehicles produces exhaust gases when running. The exhaust gases produced may comprise particles or elements which may be harmful to humans, animals and/or nature. Over the years, different attempts have been made to reduce the amount of these harmful particles or elements coming from the exhaust gases. It has been found that a catalytic converter arranged in an exhaust pipe system for treatment of the exhaust gases may result in a reduced level of nitrogen oxides, NOx. A further improved reduction of NOx in the exhaust gases has been achieved by mixing a reductant into the exhaust gases prior to treatment of the exhaust gases in the catalytic converter. An even further improvement has been achieved when a reductant of e.g. urea, being converted into an ammonia gas, was introduced into the exhaust pipe system and mixed with the flowing exhaust gases.

US 2007/0048204 A1 discloses a technique having urea introduced into an exhaust pipe system to reduce emission of NOx in the exhaust gases upon treatment in a catalytic converter. Prior to entering into the exhaust pipe system, the urea in US 2007/0048204 A1 is pressurized and heated. Upon entering into the exhaust pipe system containing exhaust gases, upstream the catalytic converter, the pressurized and heated urea is converted into ammonia gas. The conversion and mixing of the ammonia gas takes place in a mixing part of the exhaust pipe system upstream the catalytic converter. The mixing part has a length which is primarily dedicated to the mixing of the reductant into the exhaust gases. After the mixing, the mixture of ammonia gas and exhaust gases enters into the catalytic converter. Inside the catalytic converter the ammonia gas reacts with the exhaust gases in a chemical process resulting in a reduction of the level of NOx in the exhaust gases.

Document DE 10 2006 055 655 A discloses a supply element for liquids and/or gases.

A drawback with prior art technology is that the length of the mixing part may determine, or affect, how well the reductant is mixed with the exhaust gases inside the exhaust pipe system, hence, how effective the system is in reducing the emission of NOx. If the mixing part is too short then a low conversion of NOx may be achieved. If the mixing part is too short then not enough of urea will be able to converse into ammonia gas. The length of the mixing part in the prior art solution has to satisfy two conflicting requirements:
a) to be sufficiently long in order for the ammonia gas to be converted and mixed into the exhaust gases prior to entering into the catalytic converter. Being in liquid phase, the urea that hasn't been converted into ammonia gas may have a low probability of being mixed with the exhaust gases, hence to reduce their NOx level.
b) to be as short as possible to reduce the total length of the exhaust gas system and simultaneously be sufficiently long in order to fulfill requirement a).

### SUMMARY OF THE INVENTION

An object of the invention is to provide a compact exhaust pipe system whose length is not dependent on the mixing length required to mix a reductant with exhaust gases prior to the exhaust gases entering into a catalytic converter.

Another object of the invention is to provide an exhaust gas treatment arrangement where a reductant which do not need to go through a process of phase change upon being introduced into the exhaust pipe system may be used.

Another object of the invention is to reduce, or ameliorate, at least some of the drawbacks in known technology, or to provide useful alternatives thereto.

This and other objects are achieved by the exhaust gas treatment arrangement according to claim 1.

As such, the present invention relates to an exhaust gas treatment arrangement for treating exhaust gases flowing along a flow path in an exhaust pipe system. The arrangement comprises a supply element being in communication with a source comprising ammonia gas. The supply element comprises at least two discharge apertures being adapted to communicate with the flow path such that the ammonia gas is dispersible from the discharge apertures into the exhaust gases in the flow path in at least two discharge directions.

An exhaust pipe system with the arrangement of the present invention may be constructed comprising a short, reduced or almost eliminated mixing length. The shortened exhaust pipe system thus provides as an advantage that the exhaust pipe system may be made using less material. This reduced use of material may further have a positive impact of the production cost, which thus may be decreased. Another advantage casued by the reduced mixing length is that a higher temperature of the exhaust gases entering into the catalytic converter may be achieved. This because the flow path for the exhaust gases from the combustion engine to the catalytic converter is shortened. A high temperature of the exhaust gases is desirable as they enter into the catalytic converter. A high temperature of the exhaust gases has proven to improve the chemical reaction between the reductant and the exhaust gases in the catalytic converter, and thus to reduce the level of NOx in the exhaust gases.

Another advantage in accordance with the invention is that no mixing device has to be present in the flow path to achieve sufficient mixing between of the reductant into the exhaust gases. Another further advantage is that the mixing and distribution of the reductant into the flow path may be achieved without backpressure losses.

According to the present invention, the supply element may be adapted to be arranged on an outside of said exhaust pipe system. Being arranged on the outside allows the supply element to communicate with e.g. the source comprising the reductant. A flow of reductant from the source may then be provided to the flow path in the exhaust pipe system.

According to the present invention, the supply element may be adapted to be arranged within said exhaust pipe system. The arrangement within said exhaust pipe may be achieved by including an internal element of the supply element within said exhaust pipe for dispersing, e.g. spraying, the reductant directly into the flow path of exhaust gases.

According to the present invention, the supply element may be ring-shaped. The ring-shaped element may be uniformly arranged in the flow path having a substantially circular cross-section. The ring-shaped element may comprise discharge apertures which are uniformly and symmetrically arranged along the ring shaped element. The reductant is uniformely dispersed into the flow path via the uniformly and symmetrically arranged discharge apertures.

According to the present invention, the supply element may be adapted to extend across said flow path. Such extension may be achieved by including a tube element in the supply element. The tube element may extend symmetrically partly, or in full, across the flow path. The tube element may comprise discharge apertures which are uniformly and symmetrically arranged along the tube element crossing the flow path. The reductant is arranged to be uniformly dispersed into the flow path by the discharge apertures of the tube element.

According to the present invention, each discharge aperture may comprise an opening, a spray nozzle or a discharge head. The reductant may be arranged to enter into the flow path uniformly as a gas via the discharge apertures whereby a direct mix with the exhaust gases may be achieved. An effect of using spray nozzles is that the reductant may be dispersed as a stream in gas form, or e.g. as small droplets, inside the flow path. As such, the reductant entering may therefore mix directly with the exhaust gases in the flow path.

According to the present invention, the arrangement may further comprise a mixing unit for mixing air with the ammonia gas before said ammonia gas is dispersed into the exhaust gases. The air being mixed with the ammonia gas may e.g. be pressurized assistant gas which may consist of air or other equivalent alternatives to air. The ammonia gas adapted for being mixed into the exhaust gases is the reductant for the process. Assistant gas may be pressurized by e.g. a boost pressure, exhaust manifold pressure, compressor or other means and or methods. Boost pressure may be a preferred method as it in general is present in the vehicles. Boost pressure may therefore be non expensive and fairly easy to adapt for pressurizing the assistant gas. The volume of the reductant to be used for dispersing into the exhaust gases may be increased by mixing air, e.g. assistant gas, into the ammonia gas prior to entry into the exhaust gases. The mixing effect is improved when a large volume of reductant is introduced into the exhaust gases. The mixing may further results in an improved distribution of the ammonia gas with and against the substrates of the catalytic converter. A low volume of reductant having a high concentration of ammonia gas being mixed into the exhaust gases may result in poor mixing compared to a large volume of reductant having a lower concentration of ammonia gas introduced into the exhaust gases. The reductant may be introduced into the flow path under high pressure.

A second aspect of the present invention relates to an exhaust pipe system comprising an exhaust pipe and an exhaust gas treatment arrangement according to the first aspect of the present invention. A supply element may lead ammonia gas into the exhaust gases in the flow path via at least one gas inlet through a wall element in the exhaust pipe system,.

According to the second aspect of the present invention, the system may comprise a catalytic converter having a first substrate and a second substrate arranged in the exhaust gas flow path between an inlet and an outlet of said catalytic converter. The second substrate is arranged upstream of said first substrate, and the discharge apertures are arranged in the flow path between said first substrate and second substrate. A partial first cleaning of the exhaust gases may take place at the second substrate when the exhaust gases enter into the catalytic converter. After having passed through the second substrate the exhaust gases may enter into a space arranged in the flow path after the second substrate and before the first substrate. The reductant may be introduced and mixed into the exhaust gases flowing through the flow path in such a space. The mixture of exhaust gases and reductant continues from the space into the first substrate. In the first substrate the mixture of exhaust gases and reductant reacts with the surface of the first substrate resulting in a reduction of the NOx in the exhaust gases.

The reductant in gas form, e.g. ammonia gas, may be introduced or dispersed directly into the exhaust pipe system. This has the effect that the mixing length, where the reductant may be conversed from a liquid phase into a gaseous phase, therefore will be superfluous. The shortening of the mixing length results in to a reduction of the total distance between the combustion engine and the catalytic converter. Such a reduction of the length of the exhaust gas flow before entering the catalytic converter results in an increased temperature of the exhaust gases. A high temperature of the exhaust gases inside the catalytic converter has a positive impact on the catalytic effect of the catalytic converter.

According to the second aspect of the present invention, the discharge apertures may, with respect to each other seen in a cross-section of the flow path, be arranged symetrically in the flow path. By spraying or introducing the reductant into the exhaust gases from the cross sectionally symmetrically arranged discharge apertures a uniform mixture between the exhaust gases and reductant may be achieved.

According to the second aspect of the present invention, the catalytic converter may comprise a Selective Catalytic Reduction (SCR) catalytic converter or a SCR coated substrate. Further, the catalytic converter may also comprise a particulate filter or another substrate which comprises a SCR coating. A SCR catalytic converter is a catalytic converter which is arranged for converting nitrogen oxides, also referred to as NOx, into water, H2O, and diatomic nitrogen, N2, by using a reductant which may be mixed with the exhaust gases.

A third aspect of the present invention relates to a method of treating exhaust gases flowing along a flow path in an exhaust pipe system. The method comprises the step of discharging an ammonia gas into said flow path from at least two discharge apertures in at least two discharge directions.

According to the third aspect of the present invention, the method comprises the step of discharging ammonia gas symmetrically in three discharge directions. This has the effect that a rapid and good mixture between the ammonia gas and the exhaust gas is achieved.

According to the third aspect of the present invention, the method comprises the step of discharging ammonia gas into said flow path upstream of a first substrate in a catalytic converter. This has the effect that the exhaust gases, which enter into the first substrate, comprises a mixture of reductant.

According to the third aspect of the present invention, the method comprises the step of mixing ammonia gas with air, e.g. pressurized assistant gas, prior to discharging ammonia gas into said flow path. A highly pressurized reductant gas may, upon entering into the exhaust flow path via small openings in the discharge aperture, generate a spray-like distribution of the reductant gas into the exhaust gases.

### BRIEF DESCRIPTION OF THE DRAWINGS

The present invention will hereinafter be explained in greater detail by means of nonlimiting examples and with references and with reference to the appended drawings in which:
- Fig. 1: illustrates an exhaust gas treatment arrangement being provided with an exhaust pipe system;
- Fig. 2: illustrates a supply element having discharge apertures arranged within a flow path;
- Fig. 3: illustrates a supply element having discharge apertures in accordance with Fig. 2 arranged between two substrates;
- Fig. 4: illustrates a supply element having discharge apertures formed in a parallel tube element arranged between two substrates;
- Fig. 5: illustrates a supply element having discharge apertures formed in a ring-shaped element arranged within a flow path;
- Fig. 6: illustrates a supply element having discharge apertures formed in a flexible ringshaped element arranged within a flow path;
- Fig. 7a: illustrates, in a side view, a supply element having discharge apertures formed in a tube element which partly extends through a flow path;
- Fig. 7b: illustrates the supply element in accordance with Fig. 7b in a view which is in and aligned with the flow path and which outlets of the discharge apertures in the flow path form a triangular pattern,
- Fig. 7c: illustrates the supply element in accordance with Fig. 7b in a view which is in and aligned with the flow path and which outlets of the discharge apertures in the flow path are arranged along a diagonal across the flow path.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

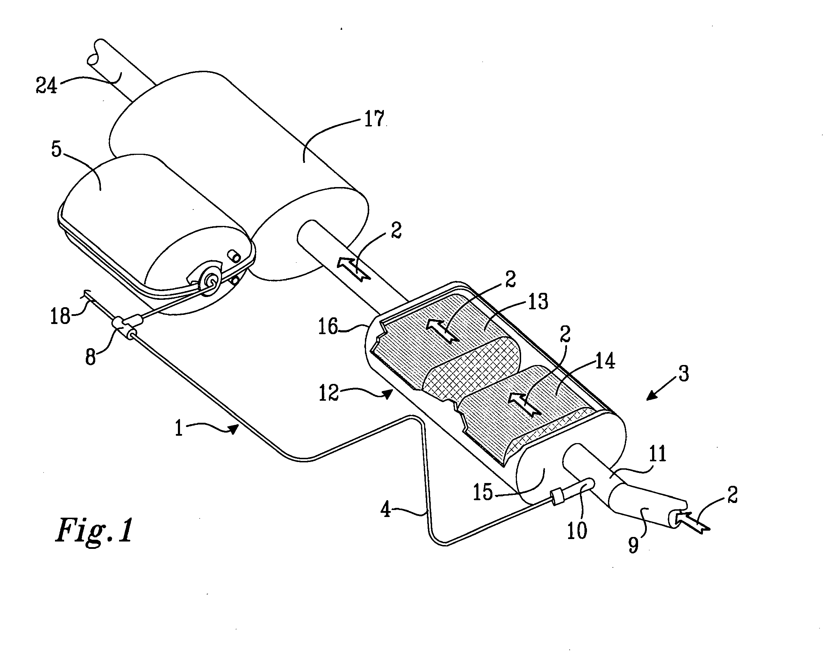

Fig. 1 illustrates an exhaust gas treatment arrangement (1) for treating exhaust gases flowing along a flow path (2) in an exhaust pipe system (3). The denomination "exhaust gas treatment arrangement" will henceforth be equivalent to "arrangement". The exhaust pipe system (3) is configured to be arranged in a vehicle and connected to an engine or motor, e.g. a combustion engine, in the vehicle. The flow path (2) extends through the exhaust pipe system (3) from the engine towards an outlet at an end part of the exhaust pipe system (3). The arrangement (1) comprises a supply element (4). The supply element (4) may be in communication with a source (5) comprising ammonia gas. The supply element (4) is a pipe, or a conduit, through which pipe the ammonia may flow from the source (5). The source (5) may be a container that is made such that it may resist a high internal pressure. Further, the source (5), container, may be made of such material whereby it may withstand a possible reaction of the material, e.g. a corrosive reaction, from a reductant being e.g. urea or ammonia contained inside the source (5).

The exhaust pipe system (3) comprises the exhaust pipe (9) or catalytic converter (12).

The supply element (4) is adapted to be arranged on an outside of the exhaust pipe system (3). This because the supply element (4), or part of the supply element (4), is configured to either directly or indirectly connect with the source (5) which may be arranged outside the flow path (2). The source (5) may in the vehicle be arranged such that it may be filled, charged and/or loaded with the reductant. The source (5) may further in the vehicle be arranged such that the source (5) can be changed or replaced if being e.g. damaged. Therefore, the supply element (4) may be arranged on an outside of the flow path (2) and the supply element (4) may thereafter connect the source (5) directly or indirectly with the exhaust pipe system (3).

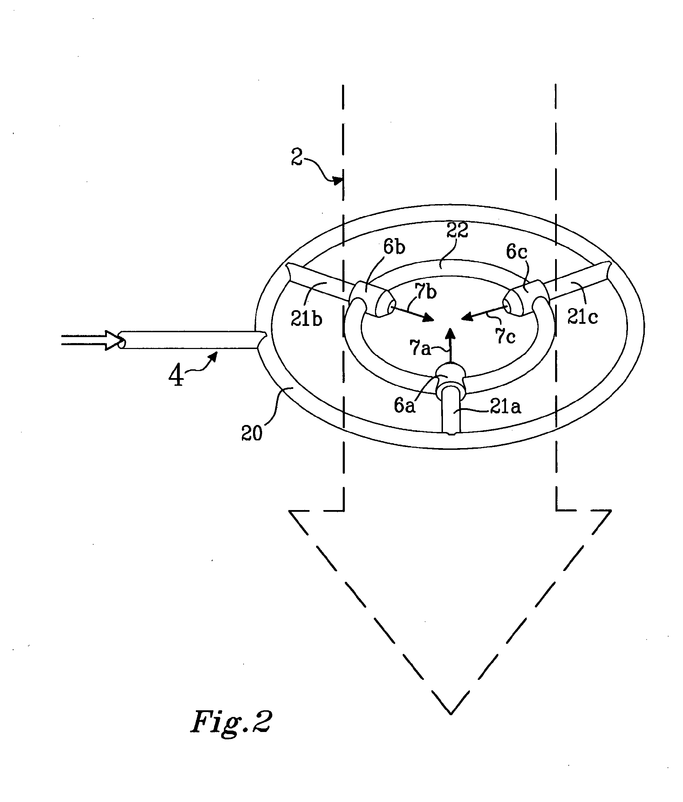

The supply element (4) is arranged with discharge apertures (6a, 6b, 6c), see Fig. 2-7.

The respective discharge aperture (6a, 6b, 6c) is arranged for discharging the reductant in a respective discharge direction (7a, 7b, 7c) inside the exhaust pipe system (3) in the flow path of the exhaust gases. This to ensure the reductant to be well mixed with the exhaust gases flowing through the exhaust pipe system (3).

The arrangement (1) comprises a mixing unit (8) for mixing air with the ammonia gas before said ammonia gas is dispersed into the exhaust gases. The mixing unit (8) is arranged such that it comprises a connection communicating with the source (5). Further comprises the mixing unit (8) an air supply (18). The air supply (18) may be a unit providing air into the mixing unit (8). The reductant, e.g. the ammonia gas, is in the mixing unit (8) mixed with the air. The mixture of ammonia gas and air is then guided through the supply channel (4) towards the exhaust pipe system (3). The supply channel (4) is connected with the exhaust pipe system (3) via a gas inlet (10). The gas inlet (10) may be arranged against a wall element (11) of the exhaust pipe system (3). The reductant may through said gas inlet (10) be directly lead or streamed into the flow path (2), e.g. as a mist. The wall element (11) may be a part of a surface of the exhaust pipe (9) being part of the exhaust pipe system (3). The wall element (11) may also be a part of a surface of a casing or shell of the catalytic converter (12). The catalytic converter (12) may further be part of the exhaust pipe system (3). The exhaust pipe (9) is in the exhaust pipe system (3) arranged between the catalytic converter (12) and the engine of the vehicle.

The catalytic converter (12) may comprise a first substrate (13). The catalytic converter (12) may further comprise a second substrate (14). A substrate in a catalytic converter is a block being e.g. monolith and made of e.g. ceramic or stainless steel. The block may be covered with e.g. a precious metal. The precious metal may e.g. be platinum, palladium and/or rhodium. The block may comprise a structure of fine channels. These channels may have a surface which preferably may be fairly coarsed. A chemical reaction will occur when the exhaust gases mixed with the reductant comes into contact with the channels. The chemical reaction results in that the NOx in the exhaust gases thus may be reduced.

The catalytic converter (12) in accordance with the invention may comprise a diesel oxidated catalyst (DOC), diesel particulate filter (DPF), selective catalytic converter (SCR) or a SCR coated DPF. A SCR catalytic converter is a catalytic converter which is adapted for converting nitrogen oxides, also referred to as NOx, into water, H2O, diatomic nitrogen, N2, by using a reductant.

The first and the second substrate (13, 14) may in the catalytic converter (12) be arranged one block with a space (19) between the substrates (13, 14) or in separate catalytic converter blocks. If the wall element (11) in accordance with above is configured to be the wall element of the catalytic converter (12), then said gas inlet (10) may be arranged in the wall element (11) of the catalytic converter (12). The gas inlet (10) may then communicate with the space (19) inside the catalytic converter (12).

The catalytic converter (12) comprises an inlet (15) and an outlet (16). The inlet (15) is connected with the exhaust pipe (9) whereby the exhaust gases may enter into the catalytic converter (12). The substrates (13, 14) are arranged between said inlet and outlet in the flow path (2) extending through the catalytic converter (12). The second substrate (14) may be arranged upstream of the first substrate (13) in the flow path (2).

In the flow path (2) after the catalytic converter (12) is an exhaust box (17) arranged. The exhaust box (17) may also be referred to as a muffler. The exhaust box (17) may be connected with the catalytic converter (12) via a pipe member extending there between. The exhaust box (17) may be a part of the exhaust pipe system (3) whereby the flow path (2) therefore may be extending through said exhaust box (17). When the exhaust gases have passed through the exhaust box (17), the exhaust gases may via a passage (24) leave the exhaust pipe system (3). The passage (24) may be arranged in the exhaust box (17) as a hole or opening through which the exhaust gases may exit after have passed through the exhaust box (17). Alternatively, the passage (24) may be arranged at an end part of a conduit member being connected with the hole or opening of the exhaust box (17). The exhaust gases leaving the exhaust pipe system (3) via the outlet may have reduced its content of NOx due to the treatment achieved when flowing through the catalytic converter (12).

In accordance with Fig. 1, the supply channel (4) is connected with the mixing unit (8). The reductant may be mixed with a pressurized gas, e.g. air, in the mixing unit (8). The reductant flow towards the discharge apertures via the supply channel (4). Any discharge apertures, in accordance with the invention, may be used in combination with the mixing unit (8).

Fig. 2 illustrates a part of the exhaust pipe system (3) having three discharge apertures (6a, 6b, 6c) arranged to provide a discharge of the reductant into the flow path (2) from three different locations in the flow path (2). Seen in a cross section through the flow path (2), the located discharge apertures (6a, 6b, 6c) may be symmetrically arranged in the flow path (2) with respect to each other. The part of the exhaust pipe system (3) illustrated in accordance with Fig. 2 may hence be a part of the exhaust pipe (9). Each discharge aperture (6a, 6b, 6c) is connected with the supply channel (4). In accordance with the embodiment of Fig. 2 the supply channel (4) comprises around the exhaust pipe (9) and/or the flow path (2) an external ring element (20). The external ring element (20) may extend outside and around the flow path (2). From the ring element (20) extends discharge conduits (21 a, 21 b, 21 c) connecting the ring element (20) with the discharge apertures (6a, 6b, 6c) via the discharge conduits (21 a, 21 b, 21 c). The reductant may thereby flow to the discharge apertures (6a, 6b, 6c). Each discharge aperture (6a, 6b, 6c) may consist of a spray nozzle or a discharge head. The spray nozzle or discharge head may spray the reductant into the flow path (2) in one or more discharge directions (7a, 7b, 7c). The reductant may thus be dispersed from the spray nozzle or spray head as a stream in a gas form, or e.g. in small droplets, in to a volume inside the flow path (2). When the reductant enters directly into the flow path from the nozzles in gas form it may directly be mixed with the exhaust gases in the flow path (2). The mixing length used in traditional exhaust gas systems may therefore be limited in accordance with the invention.

A discharge aperture (6a, 6b, 6c) may consist of a small hole or opening in the exhaust pipe (9) or in the catalytic converter. Via the small hole or opening may the reductant be introduced into the flow path and mixed with the exhaust gases therein.

The spray nozzles may be arranged with respect to each other in the flow path (2) such that the respective discharge direction (7a, 7b, 7c) or directions from each spray nozzle may be symmetrically directed with respect to each discharge direction (7a, 7b, 7c) of each spray nozzle.

In accordance with one embodiment as illustrated in Fig. 2, the spray nozzles or discharge heads may be connected with each other via an internal ring element (22). The internal ring element (22) may support the locations, or positions, of the spray nozzles or discharge heads inside the flow path (2). The internal ring element (22) may further be arranged for functioning as a part of the supply channel (4) whereby the reductant may be adapted to flow therein and between the spray nozzles or discharge heads.

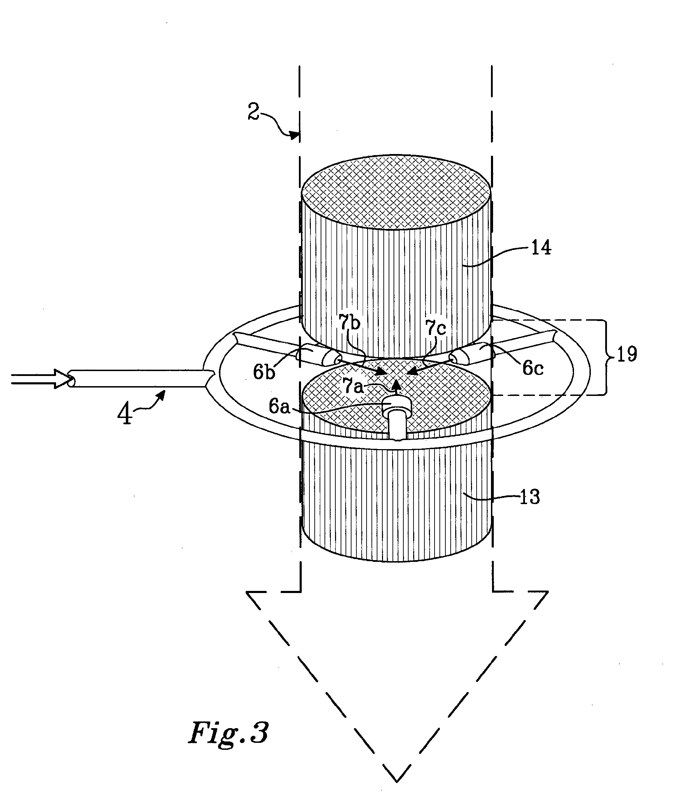

Fig. 3 illustrates an embodiment of the invention having the discharge apertures (6a, 6b, 6c) symmetrically arranged such that a symmetrical discharge of the reductant in to the flow path (2) may be achieved. In accordance with the embodiment of Fig. 3 the discharge apertures (6a, 6b, 6c) may be arranged in a space (19) arranged between the first substrate (13) and the second substrate (14) inside the catalytic converter (12). The external ring element (20) may, in accordance with Fig. 3, be arranged on an outside around the catalytic converter (12). In accordance with an alternative embodiment may the external ring element (20) be arranged such that it may be incorporated in a shell of the catalytic converter (12) and in the shell surround the flow path (2) which extends through the catalytic converter (12).

In accordance with the embodiment of Fig. 3 may the exhaust gases enter into the catalytic converter (12) and flow through the second substrate (14) for a first treatment. The exhaust gases have after the first treatment through the second substrate (14) been partly cleaned. The exhaust gases may after the second substrate (14) enter into the space (19) arranged between the substrates (13, 14). The reductant may in the space (19) there be introduced and mixed into and with the exhaust gases therein. The reductant may e.g. be an ammonia gas. After the mixture between the exhaust gases and the reductant, the mixture may continue into and through the first substrate (13). The mixed exhaust gases will in the first substrate (13) go through a chemical reaction. The reaction may result in reduction of the NOx in the exhaust gases. After the reduction of NOx, the exhaust gases may be lead or guided away from the exhaust pipe system (3) through the outlet, or passage (24) of the system.

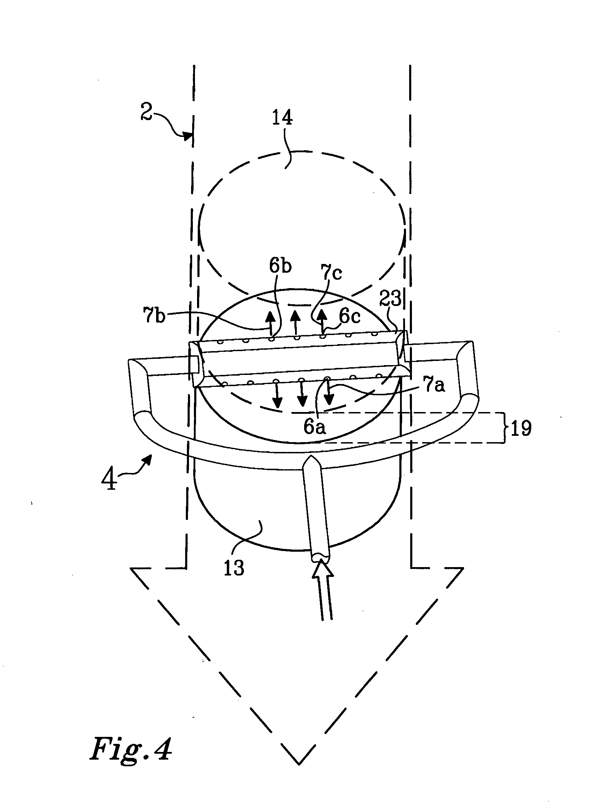

Fig. 4 illustrates an alternative embodiment of the embodiment of Fig. 3 in accordance with the invention. The supply element (4) may in Fig. 4 extend across the flow path (2) by use of an internal tube element (23). The tube element (23) may extend through the flow path (2). The tube element (23) may comprise discharge apertures (6a, 6b, 6c). The discharge apertures (6a, 6b, 6c) in accordance with Fig. 4 may comprise of small openings which are arranged throughout the tube element (23) inside the flow path (2). The tube element (23) may comprise of two parallel tubes being arranged across the flow path (2). The respective tube being parallel to each other of the tube element (23) comprises discharge apertures (6a, 6b, 6c) throughout the respective tubes extension.

The tube element (23) may be arranged in the catalytic converter (12), crossing the space (19) therein, and substantially extend perpendicular to the flow path (2). Alternatively, the tube element (23) may be arranged in and through the exhaust pipe (9) prior the catalytic converter (12) in the flow path (2).

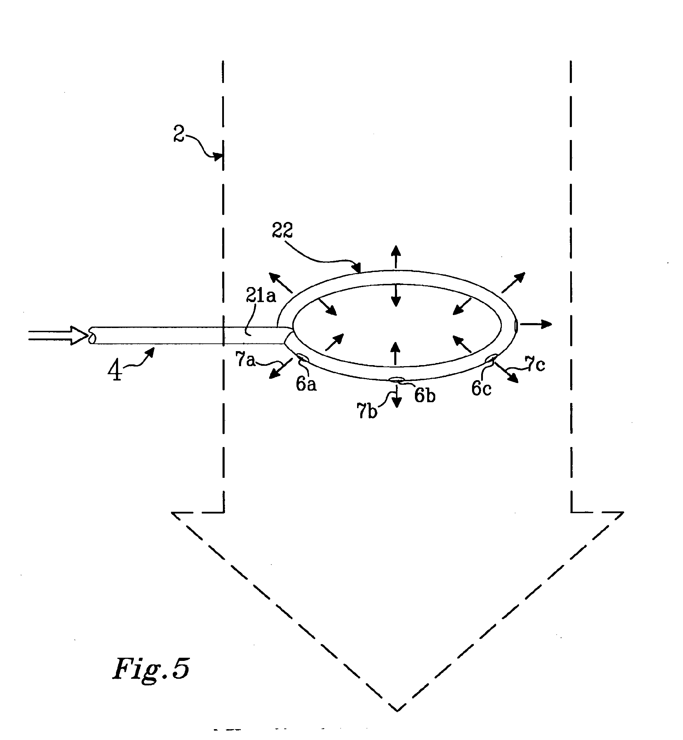

Fig. 5 illustrates an embodiment in accordance with the invention where the supply element (4) may comprise a ring-shaped part. The ring-shaped part may consist of the internal ring element (22). The internal ring element (22) may in Fig. 5 be arranged inside the flow path (2) and comprise discharge apertures (6a, 6b, 6c). The discharge apertures (6a, 6b, 6c) in accordance with Fig. 5 may be arranged on the ring element (22). The discharge apertures (6a, 6b, 6c) in Fig. 5 may comprise of small openings being arranged throughout the internal ring element (22). The supply element (4) comprises a discharge conduit (21 a) which connects with the internal ring element (22). The discharge conduit (21 a) may extend through a wall element (11) and after the wall element (11) lead into the flow path (2). The reductant may thereby be flown to the discharge apertures (6a, 6b, 6c), which discharge apertures (6a, 6b, 6c) may be arranged in the internal ring element (22) in the flow path (2) and discharge and mix the reductant into the exhaust gases flowing in the flow path (2).

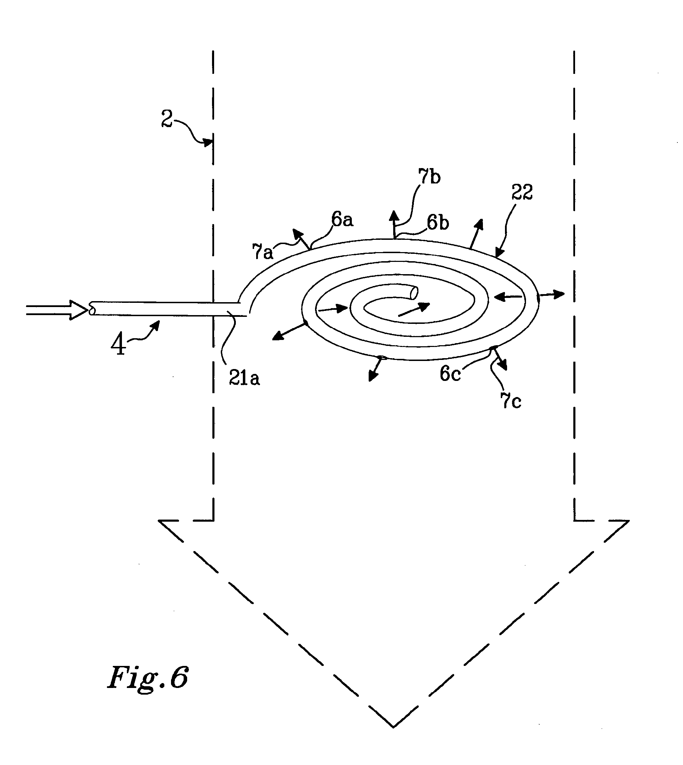

Fig. 6 illustrates an embodiment in accordance with the invention where the supply element (4) comprises a hose or flexible tube which forms an alternative internal ring element (22) to that in accordance with Fig. 5. The flexible tube comprises discharge apertures (6a, 6b, 6c) which have a similar arrangement on the tube to that in accordance to the embodiment of Fig. 5. The flexible tube is connected to a discharge conduit (21 a) which extends through a wall element (11) and lead into the flow path (2). The reductant may thereby be brought to flow to the discharge apertures (6a, 6b, 6c) and into the flow path (2).

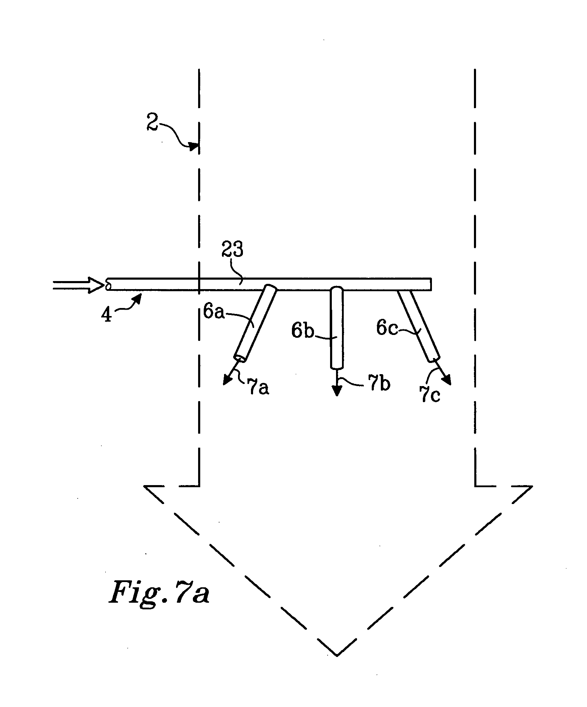

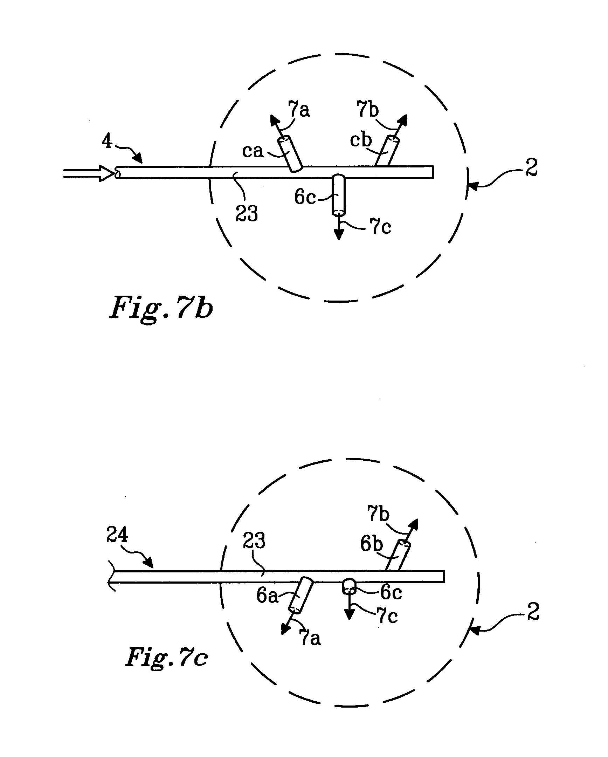

Fig. 7a and 7b illustrates an embodiment in accordance with the invention where the supply element (4) comprises a tube element (23). The tube element (23) in accordance with Fig. 7a and 7b extends partly through the flow path (2). Further, the tube element (23) extends through a center of the flow path (2). Fig. 7a is a side view of the flow path (2). In Fig. 7a a number of discharge apertures (6a, 6b, 6c), e.g. three, are connected with the tube element (23) inside the flow path (2). However, if e.g. the flow path would have a large diameter, whereby a larger volume of exhaust gases would pass there through, then, in order to obtain an efficient dispersion of reductant into the flow path, a greater amount of discharge apertures may be required. The discharge apertures (6a, 6b, 6c) are directed away from the tube element such that the reductant will be symmetrically dispersed into the flow path (2) from the discharge apertures (6a, 6b, 6c).

Fig. 7b is a view in the flow path (2). The view of Fig. 7b is directed upstream in the flow path (2). The discharge apertures (6a, 6b, 6c), in accordance with Fig. 7b, are arranged in the flow path (2) along the tube element (23). The respective discharge aperture (6a, 6b, 6c) comprises an outlet. The reductant is dispersed, through the respective outlet, into the flow path (2). The outlets of the respective discharge apertures (6a, 6b, 6c) are arranged symmetrically in the flow path with respect to each other. The outlets, in accordance with Fig. 7b, are arranged such that they form a triangular pattern within the flow path.

Fig. 7c illustrates an alternative to the arrangements of the discharge apertures (6a, 6b, 6c) of Fig. 7b. In Fig. 7c the discharge apertures (6a, 6b, 6c) are arranged along the supply element (4) such that the openings within the flow path (2) has a diagonal extension across the flow path (2).

The embodiments in accordance with Figs. 7a - 7c have the positive effects of improving mixing within the flow path (2) through being arranged within the flow path (2). The arrangement inside the flow path (2) causes turbulence of the exhaust gases and the reductant upon passing the arrangement.

In accordance with the alternative embodiments of Figs. 7a - 7c, one of the three discharge apertures (6a, 6b, 6c) may be directed opposite to the other. The discharge aperture directed opposite to the other may thus, during use, receive the exhaust gas into its opening. This has the consequence that a fraction of the exhaust gas enters into the oppositely arranged discharge aperture whereby pressure is built up therein. The exhaust gas, which has entered into the discharge aperture, will mix with the reductant in the supply element (4). After mixing in the supply element (4), the exhaust gas and the reductant will exit through the two other discharge apertures. This has the advantage of providing an ejector effect for the reductant within the two discharge apertures. This ejector effect may provide for a further improved mixing process or effect as the reductant enters into the flow path (2) to mix with the exhaust gases therein.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An exhaust gas treatment arrangement (1) for treating exhaust gases flowing along a flow path (2) in an exhaust pipe system (3), **characterised in that** said arrangement (1) comprises a supply element (4) being in communication with a source (5) containing an ammonia gas, said supply element (4) comprising at least two discharge apertures (6a, 6b, 6c) being adapted to communicate with the flow path (2) such that the ammonia gas is dispersible from the discharge apertures (6a, 6b, 6c) into the exhaust gases in the flow path (2) in at least two discharge directions (7a, 7b, 7c), wherein the arrangement (1) further comprises a mixing unit (8) for mixing assistant gas with the ammonia gas before said ammonia gas is dispersed into the exhaust gases, wherein the assistant gas is pressurized by using boost pressure, and wherein the mixing unit (8) is arranged for introducing the reductant into the flow path (2) under high pressure.

2. The arrangement (1) according to claim 1, **characterised in that** the supply element (4) is adapted to be arranged on an outside of said exhaust pipe system (3).

3. The arrangement (1) according to claim 1, **characterised in that** the supply element (4) is adapted to be arranged in said exhaust pipe system (3).

4. The arrangement (1) according to any of claims 1 - 3, **characterised in that** the supply element (4) is ring-shaped.

5. The arrangement (1) according to any of claims 1 - 4, **characterised in that** the supply element (4) is adapted to extend across said flow path (2).

6. The arrangement (1) according to any of claims 1 - 5, **characterised in that** each discharge aperture (6a, 6b, 6c) comprises an opening, a spray nozzle or a discharge head.

7. An exhaust pipe system (3) comprising an exhaust pipe (9) and the arrangement (1) of any one of claims 1 to 6, **characterised in that** the supply element (4) via at least one gas inlet (10) through a wall element (11) in the exhaust pipe system (3) leads the ammonia gas into said flow path (2).

8. The exhaust pipe system (3) according to claim 7, **characterised in that** the system (3) comprises a catalytic converter (12) having a first substrate (13) and a second substrate (14) arranged in said flow path (2) between an inlet (15) and an outlet (16) of said catalytic converter (12), said second substrate (14) being arranged upstream of said first substrate (13), wherein said discharge apertures (6a, 6b, 6c) are arranged in the flow path (2) between said first substrate (13) and said second substrate (14).

9. The exhaust pipe system (3) according to claim 7 or 8, **characterised in that** the discharge apertures (6a, 6b, 6c) with respect to each other, seen in a cross-section in the flow path (2), have a symmetrical arrangement in the flow path (2).

10. The exhaust pipe system (3) according to any of claims 7 - 9, **characterised in that** the catalytic converter (12) comprises a SCR catalytic converter or a SCR coated substrate.

11. A method of treating exhaust gases flowing along a flow path (2) in an exhaust pipe system (3), **characterised by** discharging ammonia gas into said flow path (2) from at least two discharge apertures in at least two discharge directions (7a, 7b, 7c), wherein the ammonia gas is mixed with assistant gas prior to discharging the ammonia gas into said flow path (2), wherein the assistant gas is pressurized by using boost pressure, and wherein the reductant is introduced into the flow path (2) under high pressure.

12. The method according to claim 12, **characterised by** discharging the ammonia gas symmetrically in three discharge directions (7a, 7b, 7c).

13. The method according to claim 12 or 13, **characterised by** discharging the ammonia gas into said flow path (2) upstream of a first substrate (13) in a catalytic converter (12).

## Patentansprüche

1. Abgasbehandlungsanordnung (1) zum Behandeln von Abgasen, die entlang eines Strömungswegs (2) in einem Abgasrohrsystem (3) strömen, **dadurch gekennzeichnet, dass** die Anordnung (1) ein Versorgungselement (4) umfasst, das mit einer Quelle (5) in Kommunikation ist, die Ammoniakgas enthält, wobei das Versorgungselement (4) mindestens zwei Ausstoßöffnungen (6a, 6b, 6c) umfasst, die dazu ausgelegt sind, mit dem Strömungsweg (2) derart zu kommunizieren, dass das Ammoniakgas aus den Ausstoßöffnungen (6a, 6b, 6c) in die Abgase in dem Strömungsweg (2) in mindestens zwei Ausstoßrichtungen (7a, 7b, 7c) dispergiert werden kann, wobei die Anordnung (1) ferner eine Mischeinheit (8) umfasst, um Hilfsgas mit dem Ammoniakgas zu mischen, bevor das Ammoniakgas in die Abgase dispergiert wird, wobei das Hilfsgas unter Verwendung von Ladedruck mit Druck beaufschlagt wird und wobei die Mischeinheit (8) dazu ausgelegt ist, das Reduktionsmittel unter hohem Druck in den Strömungsweg (2) einzuleiten.

2. Anordnung (1) nach Anspruch 1, **dadurch gekennzeichnet, dass** das Versorgungselement (4) dazu ausgelegt ist, auf einer Außenseite des Abgasrohrsystems (3) angeordnet zu sein.

3. Anordnung (1) nach Anspruch 1, **dadurch gekennzeichnet, dass** das Versorgungselement (4) dazu ausgelegt ist, in dem Abgasrohrsystem (3) angeordnet zu sein.

4. Anordnung (1) nach einem der Ansprüche 1 bis 3, **dadurch gekennzeichnet, dass** das Versorgungselement (4) ringförmig ist.

5. Anordnung (1) nach einem der Ansprüche 1 bis 4, **dadurch gekennzeichnet, dass** das Versorgungselement (4) dazu ausgelegt ist, sich über den Strömungsweg (2) zu erstrecken.

6. Anordnung (1) nach einem der Ansprüche 1 bis 5, **dadurch gekennzeichnet, dass** jede Ausstoßöffnung (6a, 6b, 6c) eine Öffnung, eine Sprühdüse oder einen Ausstoßkopf aufweist.

7. Abgasrohrsystem (3), das ein Abgasrohr (9) und die Anordnung (1) nach einem der Ansprüche 1 bis 6 umfasst, **dadurch gekennzeichnet, dass** das Versorgungselement (4) das Ammoniakgas über mindestens einen Gaseinlass (10) durch ein Wandelement (11) in dem Abgasrohrsystem (3) in den Strömungsweg (2) führt.

8. Abgasrohrsystem (3) nach Anspruch 7, **dadurch gekennzeichnet, dass** das System (3) einen Katalysator (12) umfasst, der ein erstes Substrat (13) und ein zweites Substrat (14) aufweist, die in dem Strömungsweg (2) zwischen einem Einlass (15) und einem Auslass (16) des Katalysators (12) angeordnet sind, wobei das zweite Substrat (14) vorgeschaltet vor dem ersten Substrat (13) angeordnet ist, wobei die Ausstoßöffnungen (6a, 6b, 6c) in dem Strömungsweg (2) zwischen dem ersten Substrat (13) und dem zweiten Substrat (14) angeordnet sind.

9. Abgasrohrsystem (3) nach Anspruch 7 oder 8, **dadurch gekennzeichnet, dass** die Ausstoßöffnungen (6a, 6b, 6c) in einem Querschnitt in dem Strömungsweg (2) gesehen in Bezug zueinander eine symmetrische Anordnung in dem Strömungskanal (2) aufweisen.

10. Abgasrohrsystem (3) nach einem der Ansprüche 7 bis 9, **dadurch gekennzeichnet, dass** der Katalysator (12) einen SCR-Katalysator oder ein SCR-beschichtetes Substrat umfasst.

11. Verfahren zum Behandeln von Abgasen, die entlang eines Strömungswegs (2) in einem Abgasrohrsystem (3) strömen, **gekennzeichnet durch** ein Ausstoßen von Ammoniakgas in den Strömungsweg (2) aus mindestens zwei Ausstoßöffnungen in mindestens zwei Ausstoßrichtungen (7a, 7b, 7c), wobei das Ammoniakgas vor dem Ausstoßen des Ammoniakgases in den Strömungsweg (2) mit Hilfsgas gemischt wird, wobei das Hilfsgas unter Verwendung von Ladedruck mit Druck beaufschlagt wird und wobei das Reduktionsmittel unter hohem Druck in den Strömungsweg (2) eingeleitet wird.

12. Das Verfahren nach Anspruch 11, **gekennzeichnet durch** ein symmetrisches Ausstoßen des Ammoniakgases in drei Ausstoßrichtungen (7a, 7b, 7c).

13. Verfahren nach Anspruch 11 oder 12, **gekennzeichnet durch** ein Ausstoßen des Ammoniakgases in den Strömungsweg (2) vorgeschaltet vor einem ersten Substrat (13) in einem Katalysator (12).

## Revendications

1. Agencement de traitement de gaz d'échappement (1) pour le traitement de gaz d'échappement s'écoulant le long d'un chemin d'écoulement (2) dans un système de tuyau d'échappement (3), **caractérisé en ce que** ledit agencement (1) comprend un élément d'alimentation (4) en communication avec une source (5) contenant de l'ammoniac gazeux, ledit élément d'alimentation (4) comprenant au moins deux ouvertures de décharge (6a, 6b, 6c) prévues pour communiquer avec le chemin d'écoulement (2) de telle sorte que l'ammoniac gazeux puisse être dispersé à partir des ouvertures de décharge (6a, 6b, 6c) dans les gaz d'échappement dans le chemin d'écoulement (2) dans au moins deux directions de décharge (7a, 7b, 7c), l'agencement (1) comprenant en outre une unité de mélange (8) pour mélanger un gaz auxiliaire avec l'ammoniac gazeux avant que ledit ammoniac gazeux soit dispersé dans les gaz d'échappement, le gaz auxiliaire étant mis sous pression en utilisant la pression de suralimentation, et l'unité de mélange (8) étant disposée de manière à introduire l'agent de réduction dans le chemin d'écoulement (2) à une pression élevée.

2. Agencement (1) selon la revendication 1, **caractérisé en ce que** l'élément d'alimentation (4) est prévu pour être disposé sur une partie extérieure dudit système de tuyau d'échappement (3) .

3. Agencement (1) selon la revendication 1, **caractérisé en ce que** l'élément d'alimentation (4) est prévu pour être disposé dans ledit système de tuyau d'échappement (3).

4. Agencement (1) selon l'une quelconque des revendications 1 à 3, **caractérisé en ce que** l'élément d'alimentation (4) est de forme annulaire.

5. Agencement (1) selon l'une quelconque des revendications 1 à 4, **caractérisé en ce que** l'élément d'alimentation (4) est prévu pour s'étendre en travers dudit chemin d'écoulement (2).

6. Agencement (1) selon l'une quelconque des revendications 1 à 5, **caractérisé en ce que** chaque ouverture de décharge (6a, 6b, 6c) comprend un orifice, une buse de pulvérisation, ou une tête de décharge.

7. Système de tuyau d'échappement (3) comprenant un tuyau d'échappement (9) et l'agencement (1) selon l'une quelconque des revendications 1 à 6, **caractérisé en ce que** l'élément d'alimentation (4), par le biais d'au moins une entrée de gaz (10) à travers un élément de paroi (11) dans le système de tuyau d'échappement (3), conduit l'ammoniac gazeux dans ledit chemin d'écoulement (2) .

8. Système de tuyau d'échappement (3) selon la revendication 7, **caractérisé en ce que** le système (3) comprend un convertisseur catalytique (12) ayant un premier substrat (13) et un deuxième substrat (14) disposés dans ledit chemin d'écoulement (2) entre une entrée (15) et une sortie (16) dudit convertisseur catalytique (12), ledit deuxième substrat (14) étant disposé en amont dudit premier substrat (13), lesdites ouvertures de décharge (6a, 6b, 6c) étant disposées dans le chemin d'écoulement (2) entre ledit premier substrat (13) et ledit deuxième substrat (14).

9. Système de tuyau d'échappement (3) selon la revendication 7 ou 8, **caractérisé en ce que** les ouvertures de décharge (6a, 6b, 6c) présentent, l'une par rapport à l'autre, vu en section transversale dans le chemin d'écoulement (2), un agencement symétrique dans le chemin d'écoulement (2) .

10. Système de tuyau d'échappement (3) selon l'une quelconque des revendications 7 à 9, **caractérisé en ce que** le convertisseur catalytique (12) comprend un convertisseur catalytique RCS ou un substrat enduit à RCS.

11. Procédé pour traiter des gaz d'échappement s'écoulant le long d'un chemin d'écoulement (2) dans un système de tuyau d'échappement (3), **caractérisé par** la décharge d'ammoniac gazeux dans ledit chemin d'écoulement (2) à partir d'au moins deux ouvertures de décharge dans au moins deux directions de décharge (7a, 7b, 7c), l'ammoniac gazeux étant mélangé avec un gaz auxiliaire avant la décharge de l'ammoniac gazeux dans ledit chemin d'écoulement (2), le gaz auxiliaire étant mis sous pression en utilisant la pression de suralimentation et l'agent de réduction étant introduit dans le chemin d'écoulement (2) à une pression élevée.

12. Procédé selon la revendication 11, **caractérisé par** la décharge d'ammoniac gazeux symétriquement dans trois directions de décharge (7a, 7b, 7c)

13. Procédé selon la revendication 11 ou 12, **caractérisé par** la décharge de l'ammoniac gazeux dans ledit chemin d'écoulement (2) en amont d'un premier substrat (13) dans un convertisseur catalytique (12).
